(19) Europäisches Patentamt / European Patent Office / Office européen des brevets

(11) **EP 4 493 351 B1**

(12) **EUROPEAN PATENT SPECIFICATION**

(45) Date of publication and mention
of the grant of the patent:
**06.05.2026 Bulletin 2026/19**

(21) Application number: **23722258.3**

(22) Date of filing: **07.03.2023**

(51) International Patent Classification (IPC):
**B23K 26/06** *(2014.01)*      **B23K 26/08** *(2014.01)*
**B23K 26/34** *(2014.01)*      **F16D 65/12** *(2006.01)*

(52) Cooperative Patent Classification (CPC):
**B23K 26/34; B23K 26/0604; B23K 26/0823;
B23K 26/0869; F16D 65/127;** F16D 2250/0084

(86) International application number:
**PCT/EP2023/000019**

(87) International publication number:
**WO 2023/174576 (21.09.2023 Gazette 2023/38)**

(54) **METHOD TO PRODUCE A COATED BRAKE DISC USING MULTI-LASER HEADS**

VERFAHREN ZUR HERSTELLUNG EINER BESCHICHTETEN BREMSSCHEIBE UNTER
VERWENDUNG VON MULTILASERKÖPFEN

PROCÉDÉ DE FABRICATION D'UN DISQUE DE FREIN REVÊTU UTILISANT DES TÊTES
MULTILASER

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **15.03.2022 DE 102022000899**

(43) Date of publication of application:
**22.01.2025 Bulletin 2025/04**

(73) Proprietor: **Oerlikon Metco AG, Wohlen
5610 Wohlen (CH)**

(72) Inventors:
• **SPATZIER, Joerg
8902 Urdorf (CH)**
• **COSKUN, Mehmet, Kemal
5400 Baden (CH)**
• **ZIKIN, Arkadi
5610 Wohlen (CH)**
• **NAJAFI, Hossein
5504 Othmarsingen (CH)**

(74) Representative: **Misselhorn, Hein-Martin
Patent- und Rechtsanwalt
Am Stein 10
85049 Ingolstadt (DE)**

(56) References cited:
**DE-A1- 102019 132 191      DE-A1- 102020 207 360**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention relates to a method for layer cladding of friction surfaces of brake discs with more than one laser and processing heads (LPH) performing the cladding process simultaneously at different locations on the same friction surface, according to the preamble of claim 1 (see for example DE 10 2019 132191 A1).

Requirements driven by the market to increase the life time of brake discs together with tightening fine dust emissions regulations, as one of the main pollution elements in the vehicle is the braking system (disc and pad), have led to an increasing demand for brake discs with a durable corrosion resistance and reduced fine dust emissions to the environment.

A method to increase wear and corrosion resistance and to reduce fine dust emissions of brake discs is to apply a corrosion and wear resistant coating onto the friction surfaces of brake discs. The coating applied to these surfaces combines the advantageous properties of cast iron as a base material, like affordability, good thermal conductivity and mechanical stability at high temperatures with the benefits of the coating like increased corrosion and wear resistance compared to the base material.

A prior art approach as outlined in EP1336054A1 reveals a brake disc coated with a metallic non-ceramic coating that shows higher oxidation and wear resistance than the cast iron core, the process being used for the coating is plasma-, flame- or wire-coating.

As described in DE102014006064A, the application of a cermet coating, consisting of a metallic matrix with oxide-ceramics, on the friction surface further improves corrosion and wear resistance. In order to overcome issues with infiltration corrosion, the application of a nitride-, carbide- and oxide-layer in between the brake disc substrate and the functional top coating can be applied. Furthermore, an intermediate Nickel-based layer to improve the adhesion of the functional top coating may be applied using thermal spray.

One of the challenges with thermally sprayed coatings on cast iron brake discs is that the graphite in form of lamellae and/or spherical particles present at the surface to be coated leads to a low adhesion of the coating as well as water dissipating through the coating or in between the brake disc substrate and the coating leads to rust. Both effects may eventually lead to delamination of the coating.

In order to overcome this, WO2022003189A1 reveals that by using a laser cladding process for coating iron-based substrate materials containing graphite, such as brake discs, graphite lamellae and/or spherical particles on the surface of the substrate can be melted or even evaporated during the coating process. However, graphite particles melting or evaporation during the laser cladding process lead to local defects and locally reduced adhesion. Subsequently the application of an angle ranging from 10° and 45° between an axis perpendicular to the substrate surface and the laser beam is revealed. The advantage of this approach is that on one hand, the adhesion of the coating on the substrate can be increased and on the other hand, laser power levels and thus deposition rates can be increased compared to a process using a laser beam being perpendicular to the substrate to be coated.

As the deposition rates and thus the time to coat a brake disc friction surface are primarily related to the power of the laser, the application of a bond-coat and a protective layer using a high-speed and high-power laser is proposed in another prior art approach. With this approach, processing times of below 110 seconds for the laser cladding of a whole brake disc of a standard size (outer diameter 288 mm; inner diameter 163 mm) can be achieved. To be able to achieve that, high-power lasers of with a power of over 20 kW are required. Using high-power lasers is therefore a reasonable way to scale up the laser-cladding process of brake discs for mass production scenarios.

However, the usage of a high-power laser results in a harm of optical components and the nozzle due to reflection of heat back to the laser and process head. This has a negative impact on the component lifetime and process stability in terms of powder feed rate to the part.. In addition to this, the high power of the laser beam may lead to a deformation of the brake disc due to thermal effects.

Reducing the power of the LPH on the other hand would increase the laser cladding process time to clad a standard brake disc surface. The application of the coating using laser cladding on a friction surface of a brake disc can be performed with the LPH moving radially from the axis of the brake disc towards the outer diameter of the friction surface whilst at the same time the brake disc is rotated around its centerline. In this case, the spot of the laser beam describes a spiral on the surface to be coated. In order to produce a smooth surface an overlap between adjacent lines of coating has to be implemented. If for example the width of the line deposited is 1,5 mm, an overlap of 90% leads to a reasonably smooth surface after laser cladding. Multiplying the width of the line deposited with the overlap results in a radial distance between successive turnings of the spiral of 0.15 mm. Using the difference of the inner (163 mm) and the outer diameter (288 mm) of a standard friction surface of a brake disc to be coated and the distance of 0.15 mm between successive turnings it can be calculated that the length of spiral is 295 m. Using a preferred relative speed of the laser beam on the surface to be coated of 100 m/min it can be calculated that the process time for laser cladding the friction surface on one side of a standard brake disc using a LPH with less than or equal to 6 kW power will be 177 s. Compared to the 110 s needed for laser cladding the same surface with an LPH with 20 kW power it is evident that even though the drawbacks of lower LPH component lifetime and increased stability of the powder deposition of the high-power LPH approach can be overcome by using one lower power LPH, the increased laser cladding process times of this approach will be a disadvantage in an industrialized process.

The objective of the invention therefore is to provide a method to coat a brake disc with a corrosion and wear resistant coating using laser cladding showing low laser cladding process times and improved properties as compared to the prior art.

According to the present invention, the challenge of laser cladding of brake discs with low process times and offering a higher process stability and less wear of the laser and processing head is solved by the definition of a method to produce a coated brake disc according to claim 1.

Further preferred embodiments of the present invention are defined in the dependent claims.

The position of the laser and processing heads vis a vis the friction surface of the brake disc to be coated can be described with polar coordinates ($r,\varphi$) where r is the distance to the rotation axis of the brake disc and $\varphi$ is the angular coordinate.

The cladding on the surface is performed according to a so called Archimedean spiral which can be described as $r=a\cdot\varphi$ with "a*2*Π" being the total increase of the radius after 360° of rotation. In the preferred solution, the brake disc is rotated in order to increase the angular coordinate. By rotating the brake disc and increasing the distance of the **LPH** from the rotation axis a spiral is described.

The length L of the Archimedean spiral can be calculated as:

$$L = \frac{a}{2}\left[asinh(\varphi(t)) + \varphi(t)\cdot\sqrt{\varphi(t)^2+1}\right]_{\varphi(t_0)}^{\varphi(t_1)}$$

In order to realize a stable deposition process, the deposition speed v is preferably kept constant. As the radius of the spiral increases the angular velocity of the disc needs to be slowed down when the LPH moves in a radial distance away from the centerline of the brake disc. The relation between deposition speed and angular velocity can be expressed in the following manner:

$$v = \frac{dL}{dt} = \frac{dL}{d\varphi}\frac{d\varphi}{dt} = a\cdot\sqrt{\varphi^2+1}\cdot\frac{d\varphi}{dt} = a\cdot\sqrt{\varphi^2+1}\cdot\omega(\varphi) = const$$

with $\omega(\varphi)$ being the angular velocity of the disc to be coated at a certain angle j.

Therefore for the cladding process the following two conditions need to be followed:

$$\omega(\varphi) = \frac{v}{a\cdot\sqrt{\varphi^2+1}}$$

$$r(\varphi) = a\cdot\varphi$$

If D is the width of the deposited line and an overlap of x in percent of the next deposited line with the previous line is required, within 360° of rotation of the brake disc the LPH should be moved according to the following relationship:

$$a = \frac{D\cdot(100\% - x)/100\%}{2\pi}$$

If we take the example of above with D = 1.5 mm and x=90%, then:

$$a = \frac{1.5mm\cdot0.1}{2\pi} = 0.0239mm$$

and with v=100m/min, then:

$$\omega(\varphi) = \frac{100000\;mm/min}{0.0239mm\cdot\sqrt{\varphi^2+1}} \approx 4200000\cdot1/min\cdot\frac{1}{\sqrt{\varphi^2+1}}$$

If the inner diameter of the disc is 163mm then:

$$\varphi(t_0) = \frac{r(t_0)}{a} = \frac{163mm}{0.0239mm} \approx 6800$$

And therefore:

$$\omega(\varphi_0) \approx 42000 \cdot \frac{1}{min} \cdot \frac{1}{\sqrt{(6800)^2 + 1}} \approx 613 \; min^{-1}$$

If the outer diameter of the disc is 288mm, then:

$$\varphi(t_{end}) = \frac{r(t_{end})}{a} = \frac{288mm}{0.0239mm} \approx 12000$$

And therefore:

$$\omega(\varphi_{end}) \approx 42000 \cdot \frac{1}{min} \cdot \frac{1}{\sqrt{(12000)^2 + 1}} \approx 347 \; min^{-1}$$

As mentioned, this is the formal description of the process for one laser and processing head.

In order to maintain a low level of heat-input and a high level of process reliability, it is proposed in the present invention to work with preferably two or even more preferably at least three laser and processing heads (LPH) with lower laser power levels preferably less or equal to 6 kW simultaneously on the same surface to be coated, minimizing the total harm of optical components and maximizing the process reliability.

If more than one LPH is used. the polar coordinates of the n-th $LPH_n$ is then noted as $(r_n, \varphi_n)$.

According to a first preferred embodiment of the present invention, the LPHs are simultaneously moved from the inner radius to the outer radius with $r(t) = r_1(t) = r_2(t) = ... = r_n(t)$, and

$$\varphi_i = \varphi_1 - 2\pi \cdot (i - 1)/n \; for \; i = 1...n$$

where n is the number of LPHs used.

As a consequence of using n LPHs, the distance d between two adjacent lines deposited as measured along a line starting from the center point of the spiral at an angle $\varphi$ can be described by the formula:

$$d = (a * \varphi)/n$$

As the distance between two adjacent lines deposited is kept constant in order to provide the overlap defined, the increment "a" can be increased by multiplying it with the number n of LPHs used:

$$a = n * \frac{D \cdot (100\% - x)/100\%}{2\pi}$$

The invention will now be described in detail with one however not limiting example.

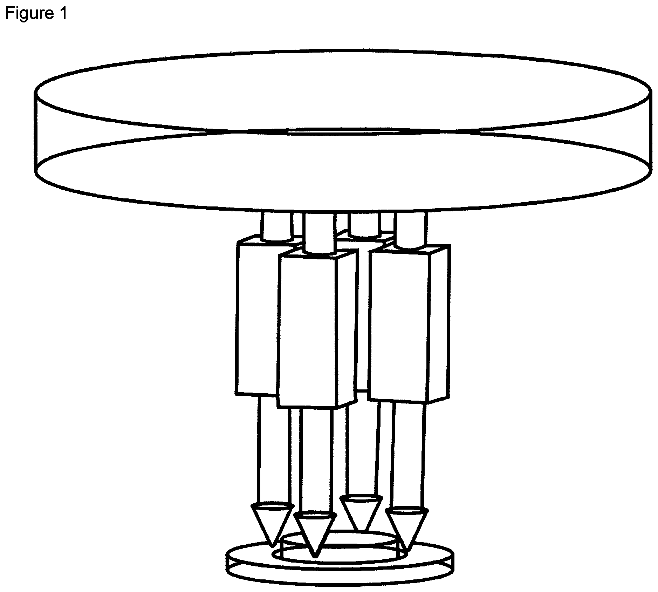

Figure 1 shows the setup for laser cladding of a brake disc with 4 LPHs.

The example shows the laser cladding of one brake disc with n=4 LPHs simultaneously. A brake disc with inner diameter of 163mm and outer diameter of 288mm is to be laser cladded. The four LPHs do have the following positions at the beginning (in polar coordinates):

1. (163mm; 6800)
2. (163mm; 6800-2π•1/4)

3. (163mm; 6800-2π•2/4)
4. (163mm; 6800-2π•3/4)

As the relative speed of the laser beam on the surface to be coated is 100 m/min for all LPHs, the disc rotates at the beginning with 613 rpm. In order to reach an overlap of 90% of the cladding lines with four LPH the increment "a" can now be chosen to be 4•0.0239 mm = 0.095 mm.

As all LPHs preferably move at the same speed in radial direction from the inner to the outer diameter of the friction surface of the brake disc to be laser cladded, the angular velocity of the brake disc can be the same for all of them.

In the example as given above each individual line deposited has a length of 73.8 m leading to process time per friction surface to be laser cladded of 44.3 seconds, which is less than half the time needed for coating the same surface using a high power laser of 20 kW. At the same time, lower power of the LPHs used in the example reduces the risks of using high power lasers as mentioned above.

This is an example with four LPH. The one skilled in the art understands that another number of LPH may be chosen but at least 3 LPH, and the angular positioning of the LPHs can be varied.

The one skilled in the art understands as well that all LPHs might start to laser clad at the same time or that there might be a delay of the cladding process for example to start the cladding of the second LPH at the same angular position of the first cladding and so on.

The example was described with starting with the inner diameter, cladding to the outer diameter. The one skilled in the art understands that starting with the outer diameter and finishing with the inner diameter is as well an option.

As the one skilled in the art knows, brake discs typically have a first friction surface and a second friction surface. First the first friction surface may be coated according to the present invention and then the second friction surface may be coated according to the present invention.

## Claims

1. A method to produce a coated brake disc, the method comprising the steps of:

   - providing a brake disc with a first and a second friction surface,
   - coating at least part of the first friction surface by a laser cladding process,
   wherein for the laser cladding process at least three laser and processing heads are used and at least during part of the laser cladding process the laser and processing heads are used simultaneously at different locations of the first friction surface,
   **characterized in that**
   during at least part of the laser cladding process the brake disc is rotated around its rotation axis and the distance of the lasers and processing heads to the rotation axis at the beginning of the part of the process is chosen to be the same and then the distance is simultaneously changed in such a manner that at any time within the part of the laser cladding process each one of the at least three laser and processing heads has the same distance to the rotation axis as the others of the at least three laser and processing heads.

2. The method according to claim 1, **characterized in that** the angular position of the lasers and processing heads is described as

$$\varphi_i \ for \ i = 1...n$$

and that the lasers and processing heads are positioned in such a way that the following condition is fulfilled:

$$\varphi_i = \varphi_1 - 2\pi \cdot (i-1)/n \ for \ i = 1...n$$

if n is the number of the lasers and processing heads.

3. The method according to claim 2, **characterized in that** the deposition start of the $i^{th}$ laser and processing head is delayed until the brake disc is rotated by an angle of

$$2\pi \cdot (i-1)/n$$

**Patentansprüche**

1. Verfahren zur Herstellung einer beschichteten Bremsscheibe, wobei das Verfahren die Schritte umfasst:

   - Bereitstellen einer Bremsscheibe mit einer ersten und einer zweiten Reibfläche,
   - Beschichten mindestens eines Teils der ersten Reibfläche durch einen Laserauftragschweißprozess, wobei für den Laserauftragschweißprozess mindestens drei Laser- und Bearbeitungsköpfe verwendet werden und mindestens während eines Teils des Laserauftragschweißprozesses die Laser- und Bearbeitungsköpfe gleichzeitig an verschiedenen Stellen der ersten Reibfläche verwendet werden,
   **dadurch gekennzeichnet, dass**
   während mindestens eines Teils des Laserauftragschweißverfahrens die Bremsscheibe um ihre Drehachse gedreht wird und der Abstand der Laser- und Bearbeitungsköpfe zur Drehachse zu Beginn des Teils des Verfahrens gleich gewählt wird und dann der Abstand gleichzeitig so verändert wird, dass zu jedem Zeitpunkt innerhalb des Teils des Laserauftragschweißverfahrens jeder der mindestens drei Laser- und Bearbeitungsköpfe den gleichen Abstand zur Drehachse hat wie die anderen der mindestens drei Laser- und Bearbeitungsköpfe.

2. Verfahren nach Anspruch 1, **dadurch gekennzeichnet, dass** die Winkelposition der Laser und Bearbeitungsköpfe als

$$\varphi_i \ \ for \ i = 1 \ldots n$$

   beschrieben wird und dass die Laser und Bearbeitungsköpfe so positioniert sind, dass die folgende Bedingung erfüllt ist:

$$\varphi_i = \ \varphi_1 \ - \ 2\pi \cdot (i-1)/n \ for \ i = 1 \ldots n$$

   wenn n die Anzahl der Laser und Bearbeitungsköpfe ist.

3. Verfahren nach Anspruch 2, **dadurch gekennzeichnet, dass** der Abscheidungsstart des $i^{ten}$ Laser- und Bearbeitungskopfes verzögert wird, bis die Bremsscheibe um einen Winkel von

$$2\pi \cdot (i-1)/n$$

   rotiert ist.

**Revendications**

1. Procédé de fabrication d'un disque de frein revêtu, le procédé comprenant les étapes:

   - fournir un disque de frein avec une première et une deuxième surface de friction,
   - revêtir au moins une partie de la première surface de friction par un procédé de revêtement laser,
   dans lequel, pour le procédé de revêtement laser, au moins trois têtes laser et de traitement sont utilisées et, au moins pendant une partie du procédé de revêtement laser, les têtes laser et de traitement sont utilisées simultanément à différents emplacements de la première surface de friction,
   **caractérisé en ce que**
   pendant au moins une partie du procédé de revêtement laser, le disque de frein est mis en rotation autour de son axe de rotation et la distance entre les lasers et les têtes de traitement et l'axe de rotation au début de la partie du procédé est choisie pour être la même, puis la distance est modifiée simultanément de telle manière qu'à tout moment pendant la partie du procédé de revêtement laser, chacune des au moins trois têtes laser et têtes de traitement ait la même distance par rapport à l'axe de rotation que les autres des au moins têtes laser et de traitement.

2. Procédé selon la revendication 1, **caractérisé en ce que** la position angulaire des lasers et des têtes de traitement est décrite par

$$\varphi_i \ \ for \ i = 1 \ldots n$$

et **en ce que** les lasers et les têtes de traitement sont positionnés de telle manière que la condition suivante soit remplie :

$$\varphi_i \ = \ \varphi_1 \ - \ 2\pi \cdot (i - 1)/n \ \ for \ i = 1 \ldots n$$

si n est le nombre de lasers et de têtes de traitement.

3. Procédé selon la revendication 2, **caractérisé en ce que** le début du dépôt de la $i^{\text{ème}}$ tête laser et de traitement est retardé jusqu'à ce que le disque de frein ait tourné d'un angle de

$$2\pi \cdot (i - 1)/n$$

Figure 1

**EP 4 493 351 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 102019132191 A1
- EP 1336054 A1
- DE 102014006064 A
- WO 2022003189 A1